# FASCICULE DE BREVET EUROPEEN

(11) **EP 2 850 520 B1**
(45) Date de publication et mention de la délivrance du brevet: **01.01.2020**
(21) Numéro de dépôt: 13723746.7
(22) Date de dépôt: 14.05.2013
(51) Int. Cl.: G06F 9/48, G06F 9/50

(54) **PROCEDE DE GESTION D'UNE EXECUTION DE TACHES DANS UN SYSTEME INFORMATIQUE**
VERFAHREN ZUR VERWALTUNG VON AUFGABENAUSFÜHRUNGEN IN EINEM RECHNERSYSTEM
METHOD FOR THE MANAGEMENT OF TASK EXECUTION IN A COMPUTER SYSTEM

(30) Priorité: 15.05.2012 FR 1254438
(43) Date de publication de la demande: 25.03.2015
(73) Titulaire: Safran Electronics & Defense, 92100 Boulogne-Billancourt (FR)
(72) Inventeur: VALPARD, Christian, 92100 BOULOGNE-BILLANCOURT (FR)
(74) Mandataire: Lavialle, Bruno François Stéphane
(86) Numéro de dépôt international: PCT/EP2013/059961
(87) Numéro de publication internationale: WO 2013/171227

(56) Documents cités:
- US-A1- 2002 138 542
- LO BELLO ET AL: "Overrun handling approaches for overload-prone soft real-time systems", ADVANCES IN ENGINEERING SOFTWARE, ELSEVIER SCIENCE, OXFORD, GB, vol. 38, no. 11-12, 27 juillet 2007 (2007-07-27), pages 780-794, XP022170459, ISSN: 0965-9978, DOI: 10.1016/J.ADVENGSOFT.2006.08.039
- Giorgio C. Buttazzo ET AL: "Adding Robustness in Dynamic Preemptive Scheduling" In: "Responsive Computer Systems: Steps Toward Fault-Tolerant Real-Time Systems", 1 janvier 1995 (1995-01-01), Springer US, XP055072018, ISBN: 978-1-46-152271-3 pages 67-88, DOI: 10.1007/978-1-4615-2271-3_4, page 7 - page 9; figure 1
- LAMINE BOUGUEROUA ET AL: "An execution overrun management mechanism for the temporal robustness of Java real-time systems", PROCEEDINGS OF THE 4TH INTERNATIONAL WORKSHOP ON JAVA TECHNOLOGIES FOR REAL-TIME AND EMBEDDED SYSTEMS , JTRES '06, 1 janvier 2006 (2006-01-01), page 188, XP055055900, New York, New York, USA DOI: 10.1145/1167999.1168030 ISBN: 978-1-59-593544-1
- BUTTAZZO G ET AL: "Handling execution overruns in hard real-time control systems", IEEE TRANSACTIONS ON COMPUTERS, IEEE SERVICE CENTER, LOS ALAMITOS, CA, US, vol. 51, no. 7, 1 juillet 2002 (2002-07-01), pages 835-849, XP011094524, ISSN: 0018-9340, DOI: 10.1109/12.990127

## Description

La présente invention concerne un procédé de gestion d'une exécution de tâches par un système informatique. Par tâche, on entend un programme ou une partie de programme enregistré dans une mémoire du système informatique pour être exécuté par un processeur dudit système.

La gestion de l'exécution des tâches est généralement confiée à un ordonnanceur qui est un programme informatique du système d'exploitation chargé d'assurer la bonne exécution des tâches. L'ordonnanceur est par exemple un ordonnanceur temps réel.

Dans certaines applications, les systèmes informatiques doivent assurer l'exécution d'un certain nombre de tâches ayant des durées, des priorités et des criticités différentes. Ceci est particulièrement compliqué lorsque doivent cohabiter des tâches critiques devant être exécutées à des moments précis et des tâches non critiques ayant des durées relativement longues. En outre, certaines tâches ont des durées d'exécution variables.

Une solution serait de prévoir au sein du système informatique plusieurs processeurs dédiés à l'exécution de certaines tâches. Cette solution est cependant très coûteuse et nécessite, pour être fiable, de sous-employer les différents processeurs.

Une autre solution serait de diviser les tâches de durée importante en sous-tâches de telle manière qu'une tâche critique puisse être exécutée entre deux sous-tâches. Ceci impose toutefois d'importantes contraintes de conception logicielle et complique considérablement les opérations de modification des tâches. De plus, ceci ne résout pas le problème des tâches dont la durée est variable.

La solution la plus couramment employée est d'assurer un partitionnement temporel de manière à définir une succession de périodes d'exécution dont certaines peuvent être réservées à l'exécution des tâches les plus critiques. Les tâches sont alors exécutées quand elles sont le plus prioritaire. Toutefois, là encore, la gestion de l'exécution des tâches dont la durée d'exécution est variable s'avère délicate.

Dans les systèmes classiques, il est défini des pas (ou fenêtres temporelles) de calcul pendant lesquels les tâches sont exécutées. Lorsque l'exécution d'une tâche est achevée avant la fin du pas de calcul, la tâche conserve la main et rentre dans une boucle non fonctionnelle. La boucle non fonctionnelle sera interrompue à la fin du pas de calcul lorsque l'ordonnanceur reprendra la main pour lancer l'exécution d'une autre tâche. Lorsque l'exécution d'une tâche n'est pas achevée à la fin du pas de calcul, l'ordonnanceur reprend la main pour lancer un algorithme de traitement d'erreur. Le recours au traitement d'erreurs est un processus coûteux en temps et en ressources.

Un procédé de gestion de dépassement du temps d'exécution est connu du document US-A-2002/0138542.

Le document de LO BELLO et AL: "Overrun handling approaches for overload-prone soft real-time systems", publié dans le journal Advances in Engineering Software (Volume 38 Issue 11-12, 27 juillet 2007, pages 780-794, Elsevier Science Ltd. Oxford, UK, ISSN: 0965-9978) décrit un autre procédé de traitement des dépassements du temps d'exécution, procédé qui associe à chaque tâche une date théorique de fin d'exécution ainsi qu'un nombre fini de points de décision où l'ordonnanceur décide de continuer ou non l'exécution de la tâche malgré son dépassement.

Un but de l'invention est de fournir un moyen permettant de mieux gérer l'exécution des tâches tout en assurant un contrôle temporel sur celles-ci.

A cet effet, on prévoit, selon l'invention, un procédé de gestion d'une exécution de tâches par au moins une unité de traitement d'un système informatique, l'unité de traitement fonctionnant selon des pas de calcul, le procédé comprenant les étapes de :
- associer à chaque tâche des caractéristiques d'exécution temporelle, les caractéristiques d'exécution temporelle comportant un indicateur de possibilité de déterminer a priori une date théorique de fin d'exécution dans un mode nominal d'exécution dans lequel l'exécution de la tâche la plus prioritaire est lancée par l'ordonnanceur à un pas de calcul donné et la tâche est terminée au pas de calcul correspondant à la date théorique de fin de la tâche et un indicateur de possibilité d'un mode étendu d'exécution dans lequel la tâche peut s'exécuter au-delà de la date théorique de fin d'exécution ;
- lorsqu'une tâche est en cours d'exécution à la date théorique de fin d'exécution, lancer un algorithme de poursuite d'exécution en cas de présence de l'indicateur de possibilité de mode étendu ou lancer un algorithme de traitement d'erreur en cas d'absence de cet indicateur ;
le procédé comprenant l'étape de mémoriser pour chaque tâche un nombre d'exécutions déjà réalisées en mode étendu et dans lequel l'algorithme d'exécution prévoit que l'exécution est poursuivie en mode étendu si le nombre d'exécutions est inférieur à un seuil et qu'un algorithme de traitement d'erreur est lancé dans le cas contraire.

Par ce procédé, il est apporté une amélioration au partitionnement temporel en mettant en place un déterminisme temporel des tâches. Ceci permet de gérer au mieux les débordements, sans risquer d'interrompre une tâche qui aurait dépassé sa date théorique de fin d'exécution alors même qu'aucune tâche plus prioritaire ne doit être exécutée à la suite de la tâche en cours d'exécution. Le mode étendu d'exécution permet ainsi l'achèvement de la tâche alors qu'une interruption et un traitement d'erreur auraient nécessité de réaliser à nouveau la tâche ultérieurement. En outre, l'interruption de la tâche peut avoir des conséquences dommageables par exemple dans le cas où le système informatique gère le fonctionnement d'une machine telle qu'un véhicule. Ceci permet également de limiter le recours au traitement d'erreurs.

Selon différents algorithmes d'exécution en mode étendu :
- l'exécution est poursuivie au-delà de la date théorique de fin jusqu'à ce que la tâche se termine effectivement.
- l'exécution est poursuivie jusqu'à une date prédéterminée et qu'un algorithme de traitement d'erreur est lancé si l'exécution n'est pas achevée à cette date prédéterminée.
- un nombre d'exécutions déjà réalisées en mode étendu est mémorisé pour chaque tâche et l'exécution est poursuivie en mode étendu si le nombre d'exécutions est inférieur à un seuil, un algorithme de traitement d'erreur est lancé dans le cas contraire.

Ce dernier algorithme est particulièrement intéressant car il permet de prendre en compte les exécutions passées de la tâche.

Avantageusement, plusieurs algorithmes de poursuite d'exécution en mode étendu sont mémorisés et les caractéristiques d'exécution temporelle comportent un identifiant d'un des algorithmes de poursuite d'exécution.

D'autres caractéristiques et avantages de l'invention ressortiront à la lecture de la description qui suit de modes de mise en œuvre particuliers non limitatifs de l'invention.

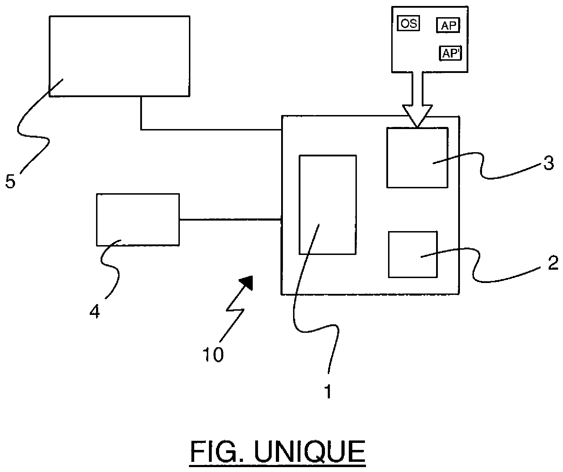

Il sera fait référence à la figure unique annexée représentant schématiquement un système informatique pour la mise en œuvre du procédé de l'invention.

En référence à la figure, le procédé de l'invention est mis en œuvre sur un système informatique, généralement désigné en 10, comprenant, de manière connue en elle-même, une unité de traitement 1 pourvue d'au moins un processeur, une mémoire morte 2, une mémoire vive 3 et des périphériques d'entrée et sortie 4.

La mémoire morte 2 contient un programme d'exploitation OS (ou en anglais « operating system ») agencé pour assurer le fonctionnement du système informatique, et des programmes d'application AP, AP' agencés pour réaliser des tâches comme des calculs ou autres traitements pour fournir des données qui seront exploitées hors du système informatique. Les différents programmes sont chargés en mémoire vive 3 pour permettre leur exécution par l'unité de traitement.

Le système d'exploitation OS assure le partage des ressources du système informatique entre les différents programmes en cours d'exécution et gère l'échange des données entre les différents composants tant matériels que logiciels du système informatique 10. Le système d'exploitation OS assure ainsi le partage de l'unité de traitement 1 entre les différentes tâches à exécuter. Ce partage est ici assuré par un ordonnanceur qui affecte aux différentes tâches à exécuter des fenêtres temporelles d'accès à l'unité de traitement. On parle usuellement de « time slots » ou de pas de calcul.

L'ordonnanceur est programmé pour mettre en œuvre le procédé, conforme à l'invention, de gestion de l'exécution des tâches par l'unité de traitement 1 du système informatique 10.

Selon le procédé de l'invention, des caractéristiques d'exécution temporelle sont associées à chaque tâche.

Les caractéristiques d'exécution temporelle comportent :
- un indicateur d'une possibilité de gestion de la tâche par l'ordonnanceur du système informatique 10 (le procédé de l'invention est ici sans effet sur les tâches qui ne sont pas gérées par l'ordonnanceur) ;
- un indicateur d'une possibilité de déterminer a priori une date théorique de début d'exécution ;
- un indicateur de possibilité de déterminer a priori une date théorique de fin d'exécution de la tâche dans un mode nominal d'exécution ;
- un indicateur d'une possibilité d'un mode étendu d'exécution de la tâche au-delà de la date théorique de fin d'exécution ;
- un indicateur d'absence de limite temporelle d'exécution ;
- un indicateur d'une possibilité d'interruption de l'exécution de la tâche, la tâche interruptible ne continuant d'être exécutée que si elle a la priorité la plus forte des tâches demandant une exécution ;
- un indicateur d'une possibilité de modifier les caractéristiques d'exécution temporelle, cet indicateur de possibilité de modifier les caractéristiques d'exécution temporelle précisant si la modification est réalisable par un élément du système informatique ou une autre tâche en cours d'exécution (une telle modification permet par exemple d'adapter les caractéristiques d'exécution temporelle à de nouvelles conditions de fonctionnement).

Les caractéristiques d'exécution temporelle sont par exemple codées sur des nombres hexadécimaux par exemple de quatre bits chacun.

A titre d'exemple, on prévoit que les caractéristiques d'exécution temporelle comprennent le nombre composé des chiffres a, b, c, d dont les valeurs sont égales soit à 0 soit à 1 selon le tableau suivant :

| | a | b | c | D |
|---|---|---|---|---|
| 0 | Gérée par l'ordonnanceur | Date de début déterministe | Date de fin déterministe | Non interruptible |
| 1 | Non gérée par l'ordonnanceur | Date de début non déterministe | Date de fin non déterministe | Interruptible |

Par déterministe, on entend que la date théorique de début ou de fin peut être calculée avant le lancement de l'exécution de la tâche. Ainsi, toutes les tâches cycliques ou semi-cycliques ont des dates de début déterministes même si elles sont tout de suite préemptées par une tâche plus prioritaire. En revanche, les tâches acycliques (dont l'exécution est lancée par d'autres tâches ou en fonction d'évènements externes) ont des dates de début non déterministes.

En mode de fonctionnement nominal, l'exécution de la tâche la plus prioritaire est lancée par l'ordonnanceur à un pas de calcul donné et la tâche est terminée au pas de calcul correspondant à la date théorique de fin de la tâche. L'ordonnanceur peut alors reprendre la main et lancer l'exécution de la tâche la plus prioritaire suivante. Au besoin, si l'exécution de la tâche est achevée avant le pas de calcul correspondant à la date théorique de fin de la tâche, la tâche rentre dans une boucle sans fin non fonctionnelle jusqu'à ce que l'ordonnanceur reprenne la main.

Lorsqu'une tâche est en cours d'exécution à la date théorique de fin d'exécution, plusieurs cas se présentent.

Les caractéristiques d'exécution temporelle ne comportent pas d'indicateur de possibilité d'interruption : l'exécution de la tâche se poursuit jusqu'à ce qu'elle soit terminée.

Les caractéristiques d'exécution temporelle comportent un indicateur de possibilité d'interruption mais pas d'indicateur d'une possibilité de déterminer a priori une date théorique de fin d'exécution : la tâche est interrompue pour lancer l'exécution d'une tâche plus prioritaire s'il en existe une en attente d'exécution.

Les caractéristiques d'exécution temporelle comportent un indicateur de possibilité de déterminer a priori une date théorique de fin d'exécution de la tâche dans un mode nominal d'exécution mais pas d'indicateur d'une possibilité d'un mode étendu d'exécution de la tâche au-delà de la date théorique de fin d'exécution : un algorithme de traitement d'erreur est lancé par l'ordonnanceur.

Les caractéristiques d'exécution temporelle comportent un indicateur de possibilité de déterminer a priori une date théorique de fin d'exécution de la tâche dans un mode nominal d'exécution et un indicateur d'une possibilité d'un mode étendu d'exécution de la tâche au-delà de la date théorique de fin d'exécution : le procédé comprend l'étape de lancer un algorithme de poursuite d'exécution.

Selon un premier mode de mise en œuvre, l'algorithme d'exécution prévoit que l'exécution est poursuivie au-delà de la date théorique de fin jusqu'à ce que la tâche se termine effectivement.

Selon un deuxième mode de mise en œuvre, l'algorithme d'exécution prévoit que l'exécution est poursuivie jusqu'à une date prédéterminée et qu'un algorithme de traitement d'erreur est lancé si l'exécution n'est pas achevée à cette date prédéterminée. Ladite date prédéterminée est propre à chaque tâche et dans ce cas de préférence enregistrée dans les caractéristiques d'exécution temporelle.

Selon un troisième mode de mise en œuvre, le procédé comprend l'étape de mémoriser pour chaque tâche un nombre d'exécutions déjà réalisées en mode étendu et l'algorithme d'exécution prévoit que l'exécution est poursuivie en mode étendu si le nombre d'exécutions est inférieur à un seuil. Un algorithme de traitement d'erreur est lancé si le nombre d'exécutions a atteint ledit seuil. Le seuil est déterminé pour chaque tâche en déterminant le nombre de fois où il est possible d'exécuter la quasi-totalité de la tâche sans provoquer un problème de temps réel pour les autres tâches. Le seuil est donc ici égal au nombre maximal de fois où l'activation de la tâche peut être répétée sans que les exécutions successives de celle-ci ne gênent l'exécution des autres tâches.

De préférence dans ce mode de mise en œuvre, le seuil figure parmi les caractéristiques d'exécution temporelles de la tâche en question. Ceci permet d'adapter le seuil à la tâche à réaliser, sa robustesse, sa criticité...

De préférence encore dans ce mode de mise en œuvre, le nombre d'exécutions déjà réalisées en mode étendu pour la tâche concernée est réinitialisé ou décrémenté en cas de survenance d'un évènement prédéterminé. L'évènement prédéterminé est par exemple une exécution complète de ladite tâche avant la date théorique de fin d'exécution, un redémarrage du système informatique, un signal sur une entrée du système informatique...

Dans un quatrième mode de mise en œuvre, il est prévu plusieurs algorithmes d'exécution en mode étendu mémorisés et les caractéristiques d'exécution temporelle comportent un identifiant d'un des algorithmes d'exécution qui sera lancé en cas de poursuite de l'exécution à la date théorique de fin d'exécution.

Dans ce quatrième mode de mise en œuvre, on prévoit par exemple que les algorithmes d'exécution des premier, deuxième et troisième modes de mise en œuvre sont mémorisés dans la mémoire morte 2 et les données personnelles des tâches susceptibles d'une exécution en mode étendu comportent un identifiant de l'algorithme à exécuter en mode étendu.

Bien entendu, l'invention n'est pas limitée aux modes de mise en œuvre décrits mais englobe toute variante entrant dans le champ de l'invention telle que définie par les revendications.

En particulier, le procédé de l'invention peut être mis en œuvre à partir d'autres caractéristiques d'exécution temporelle que celles mentionnées dans la description ci-dessus.

D'autres algorithmes d'exécution en mode étendu sont envisageables, de même que d'autres seuils ou paramètres de ceux-ci.

## Revendications

1. Procédé de gestion d'une exécution de tâches par au moins une unité de traitement d'un système informatique, l'unité de traitement fonctionnant selon des pas de calcul, le procédé comprenant les étapes de :
- associer à chaque tâche des caractéristiques d'exécution temporelle, les caractéristiques d'exécution temporelle comportant un indicateur de possibilité de déterminer a priori une date théorique de fin d'exécution dans un mode nominal d'exécution dans lequel l'exécution de la tâche la plus prioritaire est lancée par l'ordonnanceur à un pas de calcul donné et la tâche est terminée au pas de calcul correspondant à la date théorique de fin de la tâche et un indicateur de possibilité d'un mode étendu d'exécution dans lequel la tâche peut s'exécuter au-delà de la date théorique de fin d'exécution ;
- lorsqu'une tâche est en cours d'exécution à la date théorique de fin d'exécution, lancer un algorithme de poursuite d'exécution en cas de présence de l'indicateur de possibilité de mode étendu ou lancer un algorithme de traitement d'erreur en cas d'absence de cet indicateur ;
le procédé comprenant l'étape de mémoriser pour chaque tâche un nombre d'exécutions déjà réalisées en mode étendu et dans lequel l'algorithme d'exécution prévoit que l'exécution est poursuivie en mode étendu si le nombre d'exécutions est inférieur à un seuil et qu'un algorithme de traitement d'erreur est lancé dans le cas contraire.

2. Procédé selon la revendication 1, dans lequel l'algorithme d'exécution prévoit que l'exécution est poursuivie au-delà de la date théorique de fin jusqu'à ce que la tâche se termine effectivement.

3. Procédé selon la revendication 1, dans lequel l'algorithme d'exécution prévoit que l'exécution est poursuivie jusqu'à une date prédéterminée et qu'un algorithme de traitement d'erreur est lancé si l'exécution n'est pas achevée à cette date prédéterminée.

4. Procédé selon la revendication 1, dans lequel le seuil figure parmi les caractéristiques d'exécution temporelle.

5. Procédé selon la revendication 1, dans lequel le nombre d'exécutions déjà réalisées en mode étendu pour au moins une des tâches est décrémenté ou réinitialisé en cas de survenance d'un évènement prédéterminé.

6. Procédé selon la revendication 5, dans lequel l'évènement est une exécution complète de ladite tâche avant la date théorique de fin d'exécution.

7. Procédé selon la revendication 1, dans lequel plusieurs algorithmes d'exécution en mode étendu sont mémorisés et en ce que les caractéristiques d'exécution temporelle comportent un identifiant d'un des algorithmes d'exécution qui sera lancé en cas de poursuite de l'exécution à la date théorique de fin d'exécution.

8. Procédé selon la revendication 1, dans lequel les caractéristiques d'exécution temporelle d'au moins une des tâches comprennent un indicateur d'absence de limite temporelle d'exécution, l'exécution de ladite tâche étant interruptible.

9. Procédé selon la revendication 1, dans lequel les caractéristiques d'exécution temporelle d'au moins une des tâches comprennent un indicateur d'absence de limite temporelle d'exécution, l'exécution de ladite tâche n'étant pas interruptible.

10. Procédé selon la revendication 1, dans lequel les caractéristiques d'exécution temporelle d'au moins une des tâches comprennent un indicateur de possibilité d'interruption de l'exécution de ladite tâche et, une priorité étant affectée à chaque tâche, le procédé comprend l'étape d'interrompre une tâche dont les caractéristiques d'exécution temporelle comprennent un indicateur de possibilité d'interruption pour exécuter une tâche plus prioritaire.

11. Procédé selon la revendication 1, dans lequel les caractéristiques d'exécution temporelle d'au moins une des tâches comprennent un indicateur de possibilité de déterminer a priori une date théorique de début d'exécution.

12. Procédé selon la revendication 1, dans lequel les caractéristiques d'exécution temporelle d'au moins une des tâches comprennent un indicateur de possibilité de modifier les caractéristiques d'exécution temporelle.

13. Procédé selon la revendication 1, dans lequel l'indication de possibilité de modifier les caractéristiques d'exécution temporelle précise si cette modification est réalisable par un élément du système informatique ou une autre tâche en cours d'exécution.

14. Procédé selon la revendication 1, dans lequel les caractéristiques d'exécution temporelle d'au moins une des tâches comprennent un indicateur d'une possibilité de gestion de la tâche par un ordonnanceur du système informatique.

## Patentansprüche

1. Verfahren zur Verwaltung einer Aufgabenausführung durch mindestens eine Verarbeitungseinheit eines Rechnersystems, wobei die Verarbeitungseinheit gemäß Rechenschritten arbeitet, wobei das Verfahren die Schritte umfasst:
- Verknüpfen von zeitlichen Ausführungsmerkmalen mit jeder Aufgabe, wobei die zeitlichen Ausführungsmerkmale ein Flag einer Möglichkeit einer a priori Bestimmung eines theoretischen Endzeitpunktes der Ausführung in einem nominalen Ausführungsmodus umfasst, in dem die Ausführung der vorrangigsten Aufgabe von dem Scheduler zu einem gegebenen Rechenschritt gestartet wird und die Aufgabe zu dem Rechenschritt beendet wird, der dem theoretischen Endzeitpunkt der Aufgabe entspricht, sowie ein Flag einer Möglichkeit eines erweiterten Ausführungsmodus, in dem die Aufgabe über den theoretischen Endzeitpunkt der Ausführung hinaus ausgeführt werden kann;
- wenn eine Aufgabe zum theoretischen Endzeitpunkt der Ausführung in Ausführung ist, Starten eines Algorithmus zum Fortsetzen der Ausführung im Falle des Vorhandenseins des Flags einer Möglichkeit des erweiterten Modus oder Starten eines Algorithmus einer Fehlerbehandlung im Falle eines Fehlens dieses Flags;
wobei das Verfahren den Schritt des Speicherns einer Anzahl von im erweiterten Modus bereits durchgeführten Ausführungen für jede Aufgabe umfasst, und bei dem der Ausführungsalgorithmus vorsieht, dass die Ausführung im erweiterten Modus fortgesetzt wird, wenn die Anzahl der Ausführungen kleiner als ein Schwellwert ist, und im entgegengesetzten Fall ein Fehlerbehandlungsalgorithmus gestartet wird.

2. Verfahren nach Anspruch 1, bei dem der Ausführungsalgorithmus vorsieht, dass die Ausführung über den theoretischen Endzeitpunkt hinaus fortgesetzt wird, bis die Aufgabe tatsächlich beendet ist.

3. Verfahren nach Anspruch 1, bei dem der Ausführungsalgorithmus vorsieht, dass die Ausführung bis zu einem vorbestimmten Zeitpunkt fortgesetzt wird und ein Fehlerbehandlungsalgorithmus gestartet wird, wenn die Ausführung zu diesem vorbestimmten Zeitpunkt nicht abgeschlossen ist.

4. Verfahren nach Anspruch 1, bei dem der Schwellwert unter den zeitlichen Ausführungsmerkmalen ist.

5. Verfahren nach Anspruch 1, bei dem die Anzahl der bereits im erweiterten Modus durchgeführten Ausführungen für mindestens eine der Aufgaben im Falle eines Auftretens eines vorbestimmten Ereignisses dekrementiert oder reinitialisiert wird.

6. Verfahren nach Anspruch 5, bei dem das Ereignis eine vollständige Ausführung der genannten Aufgabe vor dem theoretischen Endzeitpunkt der Ausführung ist.

7. Verfahren nach Anspruch 1, bei dem mehrere Ausführungsalgorithmen im erweiterten Modus gespeichert sind und dass die zeitlichen Ausführungsmerkmale eine Kennung eines der Ausführungsalgorithmen umfassen, der im Falle eines Fortsetzens der Ausführung an dem theoretischen Endzeitpunkt der Ausführung gestartet wird.

8. Verfahren nach Anspruch 1, bei dem die zeitlichen Ausführungsmerkmale mindestens einer der Aufgaben ein Flag eines Fehlens eines Ausführungszeitlimits umfassen, wobei die Ausführung der genannten Aufgabe unterbrochen werden kann.

9. Verfahren nach Anspruch 1, bei dem die zeitlichen Ausführungsmerkmale mindestens einer der Aufgaben ein Flag eines Fehlens eines Ausführungszeitlimits umfassen, wobei die Ausführung der genannten Aufgabe nicht unterbrochen werden kann.

10. Verfahren nach Anspruch 1, bei dem die zeitlichen Ausführungsmerkmale mindestens einer der Aufgaben ein Flag einer Möglichkeit eines Unterbrechens der Ausführung der genannten Aufgabe umfassen und jeder Aufgabe eine Priorität zugewiesen wird, wobei das Verfahren den Schritt des Unterbrechens einer Aufgabe umfasst, deren zeitliche Ausführungsmerkmale ein Flag einer Unterbrechungsmöglichkeit zum Ausführen einer vorrangigeren Aufgabe umfasst.

11. Verfahren nach Anspruch 1, bei dem die zeitlichen Ausführungsmerkmale mindestens einer der Aufgaben ein Flag einer Möglichkeit einer a priori Bestimmung eines theoretischen Anfangszeitpunkts der Ausführung umfassen.

12. Verfahren nach Anspruch 1, bei dem die zeitlichen Ausführungsmerkmale mindestens einer der Aufgaben ein Flag einer Möglichkeit eines Modifizierens der zeitlichen Ausführungsmerkmale umfassen.

13. Verfahren nach Anspruch 1, bei dem die Anzeige einer Möglichkeit eines Modifizierens der zeitlichen Ausführungsmerkmale angibt, ob diese Modifizierung von einem Element des Rechnersystems oder einer anderen Aufgabe, die gerade ausgeführt wird, durchführbar ist.

14. Verfahren nach Anspruch 1, bei dem die zeitlichen Ausführungsmerkmale mindestens einer der Aufgaben ein Flag einer Verwaltungsmöglichkeit der Aufgabe durch einen Scheduler des Rechnersystems umfassen.

## Claims

1. A method of managing execution of tasks by at least one processor unit of a computer system, the processor unit operating in computation periods, and the method comprising the steps of:
• associating time-related execution characteristics with each task, the time-related execution characteristics including a flag indicating the possibility of determining, a priori, a theoretical time for the end of the task in a nominal execution mode, wherein execution of the highest priority task is launched by the sequencer in a given computation period, and the task is finished in the computation period corresponding to the theoretical end-of-task time and a flag indicating the possibility of an extended execution mode whereby execution of the task can continue beyond the theoretical end-of-execution time; and
• when a task is being executed at the theoretical end-of-execution time, launching an execution continuation algorithm in the presence of the flag indicating the possibility of extended mode, or launching an error processing algorithm in the absence of such a flag;
the method comprising a step of storing, in a memory and for each task, the number of executions already carried out in extended mode and wherein the execution algorithm makes provision for the execution to be continued in the extended mode if the number of executions is less than a threshold and for an error processing algorithm to be launched if said number of executions is not less than said threshold.

2. A method according to claim 1, wherein the execution algorithm makes provision for the execution to be continued beyond the theoretical end time until the task is actually finished.

3. A method according to claim 1, wherein the execution algorithm makes provision for the execution to be continued to a predetermined time, and for an error processing algorithm to be launched if the execution is not completed at said predetermined time.

4. A method according to claim 1, wherein the threshold is taken from among the time-related execution characteristics.

5. A method according to claim 1, wherein the number of executions already carried out in extended mode for at least one of the tasks is decremented or reinitialized if a predetermined event occurs.

6. A method according to claim 5, wherein the event is said task being fully executed before the theoretical end-of-execution time.

7. A method according to claim 1, wherein a plurality of execution algorithms are stored in a memory, for execution in extended mode, and wherein the time-related execution characteristics include an identifier of one of the execution algorithms that is launched if the execution continues after the theoretical end-of-execution time.

8. A method according to claim 1, wherein the time-related characteristics of at least one of the tasks includes a flag indicating there is no run-time bound, execution of said task being interruptible.

9. A method according to claim 1, wherein the time-related characteristics of at least one of the tasks includes a flag indicating there is no run-time bound, execution of said task not being interruptible.

10. A method according to claim 1, wherein the time-related execution characteristics of at least one of the tasks include a flag indicating the possibility of interruption of execution of said task and, with a priority being assigned to each task, the method further comprises a step of interrupting a task for which the time-related execution characteristics include a flag indicating the possibility of interruption for performing a higher-priority task.

11. A method according to claim 1, wherein the time-related execution characteristics of at least one of the tasks include a flag indicating the possibility of determining, a priori, a theoretical time for the start of execution.

12. A method according to claim 1, wherein the time-related execution characteristics of at least one of the tasks include a flag indicating the possibility of modifying the time-related execution characteristics.

13. A method according to claim 1, wherein the indication of the possibility of modifying the time-related execution characteristics specifies whether such modification can be done by an element of the computer system or by another task that is being executed.

14. A method according to claim 1, wherein the time-related execution characteristics of at least one of the tasks include a flag indicating the possibility of having the task managed by a sequencer of the computer system.
